# EUROPÄISCHE PATENTSCHRIFT

(11) **EP 2 602 635 B1**
(45) Veröffentlichungstag und Bekanntmachung des Hinweises auf die Patenterteilung: **19.02.2014**
(21) Anmeldenummer: 11192161.5
(22) Anmeldetag: 06.12.2011
(51) Int. Cl.: G01S 7/486, G01S 7/497

(54) **Verfahren zur Vermessung einer Übertragungsstrecke mittels kompensierender Amplitudenmessung und Delta-Sigma-Methode sowie Vorrichtung zur Durchführung des Verfahrens**
Method for measuring a transfer route by means of compensating amplitude measurement and delta-sigma method and device for performing the method
Procédé de mesure d'une voie de transmission à l'aide d'une mesure d'amplitude à compensation et procédé delta-sigma ainsi que dispositif destiné à l'exécution du procédé

(43) Veröffentlichungstag der Anmeldung: 12.06.2013
(73) Patentinhaber: ELMOS Semiconductor AG, 44227 Dortmund (DE)
(72) Erfinder: Dr. Egbert Spiegel, 45891 Gelsenkirchen (DE)
(74) Vertreter: Durm & Partner

(56) Entgegenhaltungen:
- EP-A1- 2 159 600
- DE-A1-102007 005 187

## Beschreibung

Die vorliegende Erfindung betrifft ein Verfahren und eine Vorrichtung sowie einen Sensor zur Vermessung eines Signalübertragungskanals von einem Sender über eine Übertragungsstrecke zu einem Sensor.

In vielen Anwendungsbereichen muss ein Übertragungskanal von einem Sender zu einem Sensor bestimmt werden. Beispielsweise kann es notwendig sein, die Entfernung eines Bezugsobjektes zu anderen Objekten zu bestimmen. In diesem Fall kann beispielsweise die Amplitudendämpfung eines Lichtsignals durch den Abstand mit 1/r⁴ zur Abstandsmessung herangezogen werden.

Hier sind zahlreiche kompensierende Verfahren bekannt, bei denen das eigentliche Übertragungssignal mit einem kompensierenden Signal am Sensor so überlagert wird, dass der Sensor ein nahezu konstantes Signal in Summe empfängt. Als Beispiele seien genannt:
DE10001955A1
DE10024156A1
DE19839730C1
DE930983U1
DE10001943C1
DE10346741B3
DE102004025345B3
DE102005013325A1
DE102005010745B3
DE102007005187B4

Alle diese Verfahren haben folgende Eigenschaften gemeinsam:
- das Kompensationssignal und/oder das Sendesignal ist ein in der Amplitude geregeltes Analogsignal;
- das Sendesignal hat ein konstantes Tastverhältnis und/oder ist im Wesentlichen monofrequent.

Das analoge Kompensationssignal ist der wesentliche Nachteil all dieser Verfahren. Es erfordert einen regelbaren Verstärker oder anders ausgedrückt einen Analog-Multiplizierer, der in der Regel nicht ohne größeren Aufwand temperaturstabil herstellbar ist. Ein solches System ist nur erschwert fertigbar. Insbesondere erfordert es sehr komplexe analoge Fertigungsprüfungen.

Ausgehend von diesem Stand der Technik liegt der vorliegenden Erfindung die Aufgabe zugrunde, eine rein digitale Ansteuerung des Senders und/oder des Kompensationssenders zu ermöglichen und hierdurch die besagten Probleme zu verringern.

Gelöst wird die Aufgabe durch ein Verfahren zur Vermessung der Übertragungseigenschaften zumindest einer ersten Übertragungsstrecke mit Hilfe zumindest eines ersten Senders, der zumindest ein Signal in besagte erste Übertragungsstrecke hineinsendet und das nach Durchgang durch zumindest einen Teil der besagten ersten Übertragungsstrecke in mindestens einem ersten Empfänger detektiert wird und das in besagtem Empfänger mit mindestens einem zweiten Signal zumindest eines zweiten Senders aus zumindest einer im Wesentlichen in ihren Eigenschaften bekannten oder vorbestimmten oder vorbestimmbaren Übertragungsstrecke im Wesentlichen summierend überlagert wird. Das Verfahren zeichnet sich dadurch aus, dass ein Sendesignal zwischen zumindest dem besagten ersten Sender und dem besagten zweiten Sender zumindest zeitweise geregelt verteilt, insbesondere zwischen diesen zumindest zeitweise zeitabhängig oder phasenabhängig geregelt umgeschaltet wird und dass bezogen auf das durch den Empfänger empfangene Signal der dortige über einen vordefinierten Zeitraum gemittelte erste Signalanteil, der dem ersten Sender zuzuordnen ist, im Wesentlichen genauso groß ist wie der dortige über den vordefinierten Zeitraum gemittelte zweite Signalanteil, der dem besagten zweiten Sender zuzuordnen ist.

Gemäß dem Verfahren wird - bezogen auf das durch den Empfänger empfangene Signal - die Abweichung des über den vordefinierten Zeitraum gemittelten ersten Signalanteils von dem über besagten vordefinierten Zeitraum gemittelten zweiten Signalanteil zumindest zeitweise als Regelsignal für die Verteilung, insbesondere für die geregelte Umschaltung des Sendesignals zwischen zumindest dem ersten Sender und dem zweiten Sender benutzt.

Im Rahmen der Erfindung wurde erkannt, dass zur rein digitalen Ansteuerung des oder der Sender eine Änderung der Modulation und des Gesamtaufbaus des Systems notwendig sind.

Das Verfahren wird erfindungsgemäß in einem Sensor oder einer Vorrichtung zur Vermessung der Übertragungseigenschaften einer Übertragungsstrecke eingesetzt. Erfindungsgemäß umfasst der Sensor eine Regelungsschaltung. Die Regelungsschaltung schließt einen Signalgenerator, einen ersten und einen zweiten Multiplizierer, einen Integrierer und einen Komparator ein. Diese Regelungsschaltung kann bevorzugt als digitale Logik oder Finite-State-Machine oder als Rechensystem ausgebildet sein, wobei das Rechensystem mindestens einen Speicher und eine zentrale Verarbeitungseinheit (Zentraleinheit, CPU) umfasst. Zusätzlich sind bei der Digitalisierung der Regelungsschaltung auch die Treiber für den ersten und zweiten Sender als Digital-Zu-Analog-Wandler ausgebildet. Bevorzugt wird ein Ein-Bit-Digital-Zu-AnalogWandler (DAC) verwendet. Alternativ und ebenso bevorzugt ist die Verwendung eines Mehr-Bit-DAC. Der Empfangsverstärker des erfindungsgemäßen Sensors ist ein Analog-Digital-Wandler (ADC, Analog-Digital-Converter), der das Empfangssignal des Empfängers in ein digitalisiertes Signal umwandelt, was dann in der digitalen Regelungsschaltung weiter verarbeitet wird.

Somit findet erst vor Speisung der Sender eine Umwandlung der digitalen Signale in analoge Signale statt. Das analoge Empfangssignal des Empfängers, der beispielsweise eine Photodiode sein kann, wenn die Sender LEDs sind, wird direkt hinter dem Empfänger digitalisiert. Die Verarbeitung erfolgt digital.

Die rein digitale Ansteuerung des Kompensationssenders hat den Vorteil dass sie zum einen viel einfacher zu testen ist - z.B. unter Zuhilfenahme eines "Scan-Paths" - und zum anderen in der Regel mit einer kleineren Chip-Fläche realisierbar ist als eine vergleichbare analoge Lösung, wie sie dem Stand der Technik entspricht.

Die erste Übertragungsstrecke ist die zu beobachtende Übertragungsstrecke, z.B. der Raum vor einem Fahrzeug. Wenn die Übertragungseigenschaften der Übertragungsstrecke, zu der auch Objekte gehören, die in dem Übertragungspfad zwischen Sender und Empfänger positioniert sind, bekannt sind, ist auch die Position der erkannten Objekte bekannt. So kann eine Objekterkennung erfolgen. Es kann zumindest die Entfernung von dem Sender bzw. dem Empfänger zu dem Objekt detektiert werden. Gegebenenfalls müssen mehrere erste Sender verwendet werden, um die Position im Raum, die Bewegung und/oder Geschwindigkeit der Objekte zu erkennen. Alternativ ist es auch möglich, mehrere Empfänger einzusetzen.

Der als zweiter Sender bezeichnete Sender ist ein Vergleichs- oder Kompensationssender, um die Vorrichtung und das Verfahren von Störeinflüssen - jedenfalls weitestgehend - unabhängig zu machen. Der zweite Sender sendet ein Signal direkt zu dem Empfänger über eine zweite Übertragungsstrecke, die von der ersten Übertragungsstrecke verschieden ist. Die Eigenschaften der zweiten Übertragungsstrecke sind bekannt, vorbestimmt oder vorbestimmbar.

Gemäß der vorliegenden Erfindung werden der erste und der zweite Sender geregelt mit einem Regelsignal angesteuert. Dabei erfolgt eine geregelte Umschaltung des Sendesignals zwischen den beiden Sendern, bevorzugt mittels eines Schalters.

Erfindungsgemäß kann der oben beschriebene Sensor, der bevorzugt weitgehend digital ausgebildet ist, in einer Vorrichtung zur Vermessung der Übertragungseigenschaften einer Übertragungsstrecke verwendet werden. Der Sensor hat einen Sensorausgang, an dem ein Umschaltsignal, das zur Umschaltung des Sendesignals zwischen dem ersten und zweiten Sender verwendet wird, an eine Verarbeitungseinheit übergeben wird. Beispielsweise kann eine derartige Vorrichtung in einem Kraftfahrzeug eingesetzt werden, um Objekte in der Nähe des Kraftfahrzeugs zu detektieren. Die Vorrichtung kann beispielsweise eine Einparkhilfe oder ein Abstandsmesser sein.

Selbstverständlich ist die vorliegende Erfindung nicht auf optische Signale beschränkt, bei denen die Sender als LED und der Empfänger als Photodiode ausgebildet sind. Die Sender können auch Spulen, Kondensatoren, kapazitive Platten, Antennen oder andere Steuerungsmittel sein, um die entsprechenden Flüsse, einschließlich fluidischer Materialflüsse aussenden zu können. Der Empfänger ist dann entsprechend ausgebildet, also beispielsweise als Photodiode, Spule, Antenne oder Ähnliches.

Die folgende Beschreibung ist nur ein Beispiel für eine Verkörperung der Er-findung. Bevor die Erfindung im Detail beschrieben wird, ist daher darauf hinzuweisen, dass sie nicht auf die jeweiligen Bauteile der Schaltung oder die jeweiligen Verfahrensschritte beschränkt ist, da diese Bauteile und Verfahren variieren können. Insbesondere können, wie im Folgenden beschrieben wird, wesentliche Teile des Verfahrens alternativ in Software oder als digitale Logik realisiert werden. Die hier verwendeten Begriffe sind lediglich dafür bestimmt, besondere Ausführungsformen zu beschreiben und werden nicht einschränkend verwendet. Wenn zudem in der Beschreibung und in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Im Folgenden wird ein Ausführungsbeispiel der Erfindung unter Bezugnahme auf die beigefügten Abbildungen beschrieben. Es zeigen:
- Figur 1:: ein Blockschaltbild einer Vorrichtung zur Durchführung des Verfahrens;

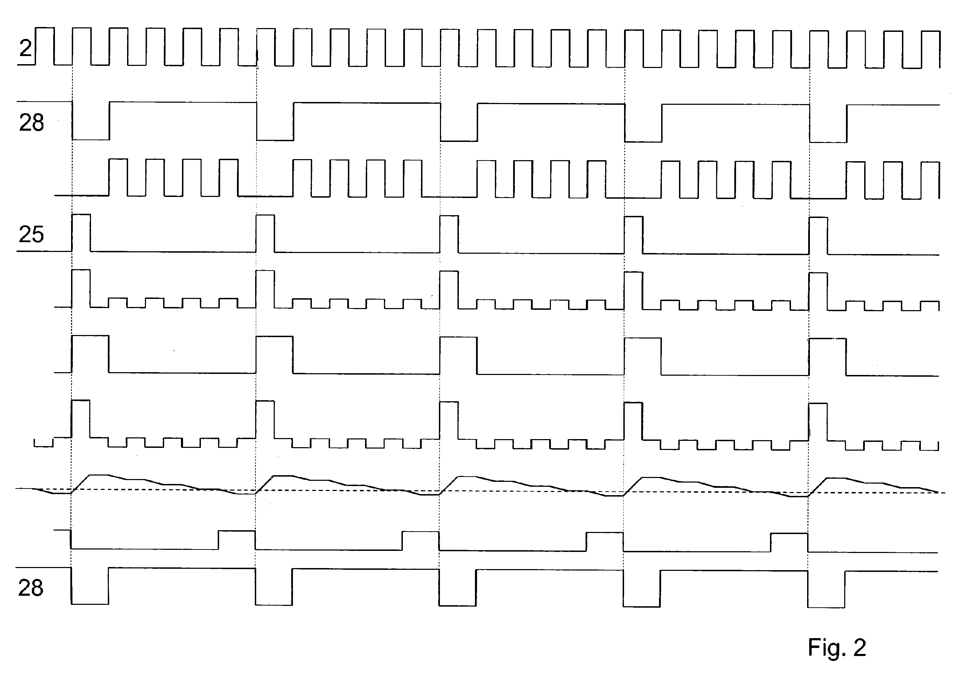

- Figur 2:: ein beispielhaftes Timing der Signale aus Fig. 1;
- Figur 3:: ein Blockschaltbild bei Realisierung als Mikroprozessorsystem; und
- Figur 4:: ein Blockschaltbild bei gleichzeitiger Amplituden-Regelung und PWM-Regelung.

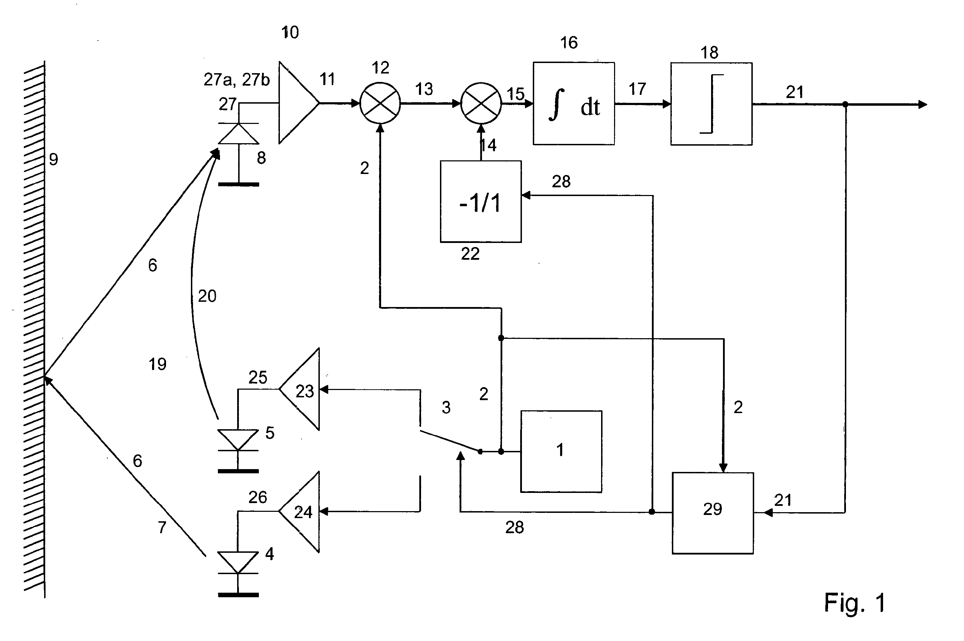

Die Erfindung wird zunächst anhand der Figuren 1 (Blockschaltbild) und 2 (Signaldiagramm) erläutert:
Ein Signalgenerator 1 erzeugt ein Signal 2, typischerweise ein Taktsignal. Dieses Signal 2 wird je nach Stellung des Schalters 3 über einen als Treiberbaustein ausgebildeten Verstärker 24 als Senderspeisesignal 26 auf einen Sender 4 oder über den als Treiberbaustein ausgebildeten Verstärker 23 als Kompensatorspeisesignal 25 auf einen Kompensationssender 5 gelenkt. In diesem beispielhaften Fall handelt es sich um eine Sende-LED 4 und eine Kompensations-Sende-LED 5. Statt des im Folgenden weiter besprochenen optischen Systems basierend auf LEDs und Photodioden sind auch andere Systeme denkbar, die beispielsweise
   ■ auf induktiv übermittelten Signalen beruhen und bei denen die Sender und Empfänger Spulen sind;
   ■ auf kapazitiven Signalen beruhen und bei denen Kondensatorplatten als Sender und Empfänger verwendet werden oder
   ■ auf induktiv übermittelten Signalen mit Spulen als Sender und Hall-Platten als Empfänger beruhen oder
   ■ auf elektromagnetischen Wellen beruhen und Antennen als Sender und Empfänger verwenden; oder
   ■ auf Schallwellen mit Lautsprechern als Sender und Mikrophonen als Empfänger beruhen; oder
   ■ auf modifizierbaren Materialflüssen basieren, beispielsweise in Röhren strömende Flüssigkeiten oder Gase oder andere Fluids, wobei Sender, beispielsweise Injektoren von Reagenzien sind, und Empfänger beispielsweise Sensoren insbesondere beispielsweise Farbmesssensoren oder -geräte sind; oder
   ■ auf anderen modifizierbaren oder modulierbaren Energie- und/oder Impulsströmen mit entsprechenden Sendern und Empfängern basieren.

Alle diese Systeme wenden das gleiche hier beschriebene Grundprinzip an.

Der Sender 4 strahlt nun ein Signal 7 in eine Übertragungsstrecke 6 ab, das nach Durchgang durch die Übertragungsstrecke 6 durch den Empfänger 8 empfangen wird. Hierbei kann das Signal durch die Übertragungsstrecke 6 modifiziert werden. Das kann beispielsweise durch Objekte 9 geschehen, an denen das Signal reflektiert wird, bevor es auf den Empfänger 8 trifft.

Das Signal 27 des Empfängers 8 wird in einem Verstärker 10 verstärkt und ggf. Impedanz gewandelt.

Das Ausgangssignal 11 des Verstärkers 10 wird mit dem Signalgeneratorsignal 2 des Signalgenerators 1 in einem Multiplizierer 12 zu einem neuen Signal 13 multipliziert.

Dieses Signal 13 wird in Abhängigkeit des digitalen Vorzeichensignals 14, das in einem Vorzeichengenerator 22 in Abhängigkeit eines Umschaltsignals 28 erzeugt wird, mit -1 bzw. +1 zum Signal 15 multipliziert. Hierdurch kommt es zu einer Auf- bzw. Abintegration des Signals 13 im nachfolgenden Integrator oder Dezimationsfilter 16. Dessen analoges Ausgangssignal 17 wird durch einen Komparator 18 in das digitale Vorzeichensignal 21 gewandelt. Dieses wird durch die Verzögerungsschaltung 29 um einen Takt des Signals 2 verzögert zum Umschaltsignal 28. Anhand des Umschaltsignals 28 wird entschieden, ob der Sender 4 mit dem Signalgenerator 1 und dem Signal 2 verbunden wird, also sendet, oder ob der Kompensationssender 5 mit dem Signalgenerator 1 und dem Signal 2 verbunden wird. Das Vorzeichensignal 21 entscheidet also über die Stellung des Schalters 3 beim nächsten Takt des Signals 2. Dieses Verfahren entspricht im Wesentlichen einer überlagerten Puls-Weiten-Modulation (PWM-Modulation) des Signals 2, wobei die PWM-Modulation zur Erzeugung des Signals 26 für den ersten Sender 4 invers zur PWM-Modulation zur Erzeugung des Signals 25 für den Kompensationssender 5 erfolgt.

Der Kompensationssender 5 strahlt selbst ein Signal 19 in eine andere Übertragungsstrecke 20 ein, die ebenfalls am Empfänger 8 endet. Dort summieren sich die Signale 7, 19 der ersten Übertragungsstrecke 6 und der zweiten Übertragungsstrecke 20.

Im Gegensatz zur bekannten Auswertung einer sogenannten "optischen Brücke" nach dem beispielsweise in DE102007005187 beschrieben Halios-Verfahren, bei dem das Summensignal 27 (Wechselanteil) der beiden Übertragungsstrecken 6, 20 im Empfänger zu Null geregelt wird, stellt sich hier der zeitliche Mittelwert der beiden Signalanteile 271, 27b (via 6, 20) zu Null am Empfänger 8 ein. Der Signalanteil 27a ist auf das Signal 7 des ersten Senders 4 zurückzuführen, der Signalanteil 27 b auf das Signal 19 des zweiten Senders 5.

Bei gegenüber der Taktfrequenz des Signalgenerators 1 langsamen Störungen - z.B. im Falle einer Verwendung von LEDs bei Fremdlichtänderung - stellt dies keinen nennenswerten Nachteil dar. Durch Anwendung eines Delta-Sigma-Verfahrens entfallen die in den bekannten Schaltungen notwendigen geregelten Stromquellen, beispielsweise für die Ansteuerung der Sende-LEDs 4, 5 im Falle der Verwendung von LEDs. Der (digitale) Bitstream am Ausgang 21 ist im Wesentlichen identisch mit dem Vorzeichensignal 14. Er ist lediglich einen Takt voraus und invertiert. Er repräsentiert die Disbalance der beiden Signalübertragungsstrecken 6, 20, also die Abweichung der Signalanteile 27a, 27b zueinander. Die Auflösung wird je nach Anwendung durch ein entsprechendes Dezimationsfilter 16 sichergestellt.

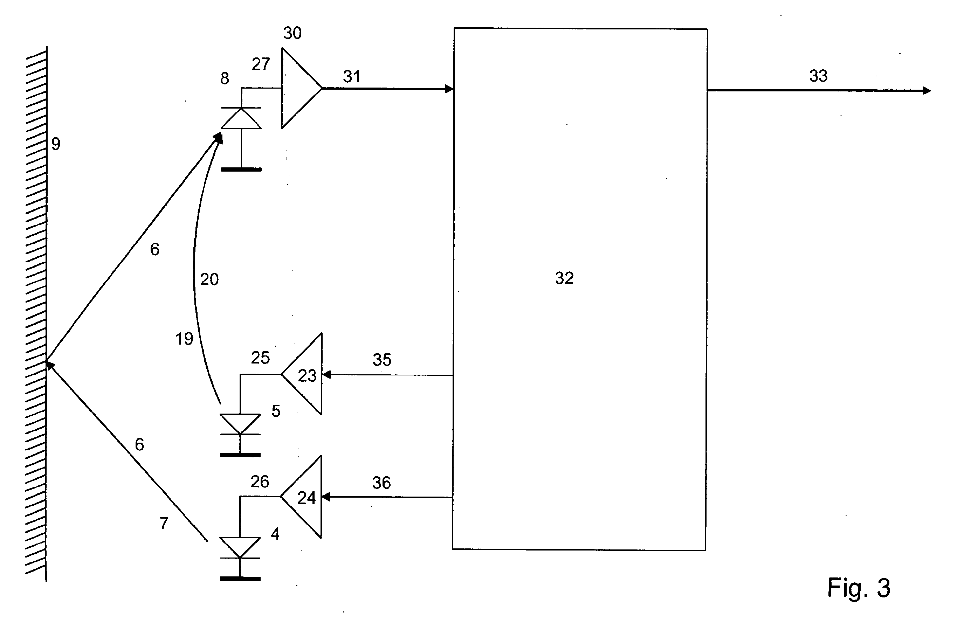

Wie bereits bemerkt kann dieses Verfahren auch in Software beispielsweise unter Nutzung einer Mikrorechner-Plattform, insbesondere einer Digitalen Signalprozessor-Plattform (DSP-Plattform), realisiert werden. Dies wird kurz und für den Fachmann ausreichend anhand von Figur 3 erläutert.

Das Signal 27 des Empfängers 8 wird durch einen Analog-zu-Digital-Wandler (ADC) 30 in ein rein digitales Signal 31 gewandelt, das einer digitalen Verarbeitungseinheit 32 zugeführt wird. Hierbei ist wichtig, dass es sich bei dem ADC 30 auch um einen Ein- oder Mehr-Bit-ADC handeln kann. Wenn in diesem Zusammenhang von einer digitalen Verarbeitungseinheit 32 gesprochen wird, so ist damit gemeint, dass deren Funktionalität im Wesentlichen auf Boolschen Funktionen beruht. Der Fachmann wird diese digitale Verarbeitungseinheit 32 typischerweise je nach Anwendungszweck beispielsweise als DSP-Plattform, Mikrorechner-Plattform oder digitale Logikschaltung etc. realisieren. In der Regel ist es sinnvoll, dass diese digitale Verarbeitungseinheit 32 mindestens zwei Ausgangssignale 35, 36, digital oder analog, aufweist, mit denen die Treiberbausteine (Verstärker) 24, 23 der Sender 4, 5 angesteuert werden. Selbstverständlich kann man je nach Standpunkt die Treiber 24, 23 als einen Teil der digitalen Verarbeitungseinheit 32 ansehen, wenn diese ebenfalls digitale Ausgangssignale 26, 25 liefern. Bei den Treibern 24, 23 kann es sich jedoch funktionell auch um Digital zu Analogwandler 24, 23 handeln, die die Signale 26, 25 nicht nur an oder ausschalten sondern in ihrer Amplitude entsprechend den vorgegebenen, dann digitalen Signalen 35, 36 ausgeben (Fig. 3).

Des Weiteren ist es sinnvoll, dass die digitale Verarbeitungseinheit 32 in der Lage ist, über eine Schnittstelle 33, die je nach Anwendungszweck digital oder analog oder einem komplexeren Standard bzw. Protokoll entsprechend gestaltet ist, mit einem übergeordnetem System zu kommunizieren und die ermittelten Daten in geeigneter Form, insbesondere digital oder analog, auszutauschen. Während die in Figur 3 gezeigte Schaltung z. B. einen Näherungssensor eines Kraftfahrzeugs darstellen kann, ist das übergeordnete System der Teil der Kraftfahrzeug-Elektronik, der die Ansteuerung, Auswertung und Anzeige der Signale bzw. deren Weiterverarbeitung übernimmt.

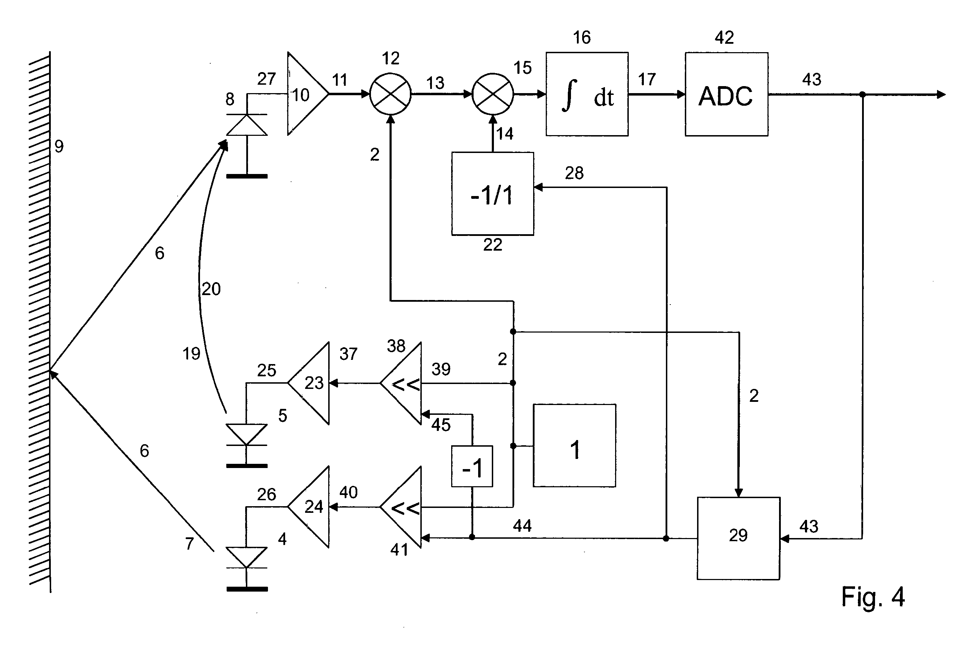

In manchen Fällen wird das System eine höhere Auflösung benötigen, als diese mit der oben beschrieben komplementären PWM-Modulation der Signale 26 und 25 erreichbar ist. Daher kann eine erweitere Schaltung gemäß Figur 4 sinnvoll sein, bei der ein Analog-/Digital-Wandler (ADC) 42 das Integrator-Signal 17 in einen digitalen Wert 43 wandelt. Dieser wird wieder in einer Verzögerungseinheit 29 um einen Takt verzögert und regelt dann nach entsprechender Anpassung 39, 44, 45 je einen regelbaren Verstärker 38, 41 in der Art, dass das Signal 2 nicht nur umgeschaltet wird, sondern dass auch eine Amplitudenregelung erfolgt. Somit werden das Signal 37 für den Kompensationssender 5 sowie das Signal 40 für den Sender 4 in der Amplitude geregelt. Zwar geht hierdurch der Vorteil einer weitestgehenden Realisierbarkeit in Digitaltechnik verloren, jedoch wird die Gesamtauflösung gegenüber dem Stand der Technik erhöht.

## Patentansprüche

1. Verfahren zur Vermessung der Übertragungseigenschaften einer ersten Übertragungsstrecke (6) zwischen einem ersten Sender (4) und einem Empfänger (8), wobei
- der erste Sender (4) ein erstes Signal (7) in die erste Übertragungsstrecke (6) hineinsendet, das nach Durchgang durch mindestens einen Teil der ersten Übertragungsstrecke (6) von dem Empfänger (8) detektiert wird,
- ein zweiter Sender (5) ein zweites Signal (19) in eine zweite Übertragungsstrecke (20) hineinsendet, die in ihren Eigenschaften bekannt, vorbestimmt oder vorbestimmbar ist,
- in den Empfänger (8) das zweite Signal (19) nach Durchgang durch die zweite Übertragungsstrecke (20) empfangen wird und mit dem ersten Signal (7) summierend überlagert wird,
**dadurch gekennzeichnet, dass**
- ein Sendesignal (2) zwischen dem ersten Sender (4) und dem zweiten Sender (5) zumindest zeitweise geregelt verteilt wird;
- ein durch den Empfänger (8) empfangenes Empfangssignal (27) einen ersten Signalanteil (27a), der dem ersten Sender (4) zuzuordnen ist, und einen zweiten Signalanteil (27b), der dem zweiten Sender (5) zuzuordnen ist, umfasst, wobei der über einen vordefinierten Zeitraum (T) gemittelte erste Signalanteil (27) genauso groß ist wie der über den Zeitraum (T) gemittelte zweite Signalanteil und
- bezogen auf das durch den Empfänger (8) empfangene Empfangssignal (27) die Abweichung des über den vordefinierten Zeitraum (T) gemittelten ersten Signalanteils (27a) von dem über den vordefinierten Zeitraum (T) gemittelten zweiten Signalanteil (27b) zumindest zeitweise als Regelsignal für die Verteilung des Sendesignals (2) zwischen dem ersten Sender (4) und dem zweiten Sender (5) genutzt wird.

2. Verfahren nach Anspruch 1, **dadurch gekennzeichnet, dass** zwischen dem ersten Sender (4) und dem zweiten Sender (5) zumindest zeitweise zeitabhängig oder phasenabhängig geregelt umgeschaltet wird und/oder eine geregelte Umschaltung des Sendesignals (2) zwischen dem ersten Sender (4) und dem zweiten Sender (5) erfolgt.

3. Verfahren nach Anspruch 1 oder 2, **dadurch gekennzeichnet, dass** das besagte Sendesignal (2) zumindest zeitweise zwischen dem besagten ersten Sender (4) und dem besagten zweiten Sender (5) in der Amplitude geregelt verteilt wird.

4. Verfahren nach einem der vorhergehenden Ansprüche, **dadurch gekennzeichnet, dass** ein Umschaltsignal (28), das zur Umschaltung zwischen einem ersten Sender (4) und einem zweiten Sender (5) genutzt wird, nach Multiplikation mit einer Konstanten mit dem verstärkten oder nicht verstärkten und/oder mit dem modulierten oder unmodulierten Empfängersignal (11, 13) multipliziert wird.

5. Verfahren nach einem der vorhergehenden Ansprüche, **dadurch gekennzeichnet, dass** zumindest eines der Sendesignale (2), das zur Ansteuerung des ersten Senders (4) und des zweiten Senders (5) genutzt wird, mit dem verstärkten oder nicht verstärkten und/oder mit dem modulierten oder unmodulierten Empfängersignal (11, 13, 15) multipliziert wird.

6. Verfahren nach einem der vorhergehenden Ansprüche, **dadurch gekennzeichnet, dass** das Empfängersignal des Empfängers (8) nach Multiplikation mit dem vorzeichenrichtigen Umschaltsignal (14) und dem Sendesignal (2) gefiltert, insbesondere integriert, wird.

7. Verfahren nach einem der vorhergehenden Ansprüche, **dadurch gekennzeichnet, dass** das Empfängersignal nach einer Filterung und/oder zumindest einer Multiplikation einem Komparator zugeleitet wird, der das Signal in ein digitales Signal umwandelt.

8. Verfahren nach einem der vorhergehenden Ansprüche, **dadurch gekennzeichnet, dass** der durch einen Komparator (18) erzeugte Bitstrom ein Maß für Eigenschaften der Übertragungsstrecke (6) von zumindest dem ersten Sender (4) zu zumindest dem Empfänger (8) und/oder ein Maß für Eigenschaften von Objekten (9) darstellt, die mit der Übertragungsstrecke (6) in einem Wirkzusammenhang stehen oder ein Teil derselben sind.

9. Verfahren nach einem der vorhergehenden Ansprüche, **dadurch gekennzeichnet, dass** ein Sendesignal (2), bevorzugt ein digitales Sendesignal (2), erzeugt wird.

10. Verfahren nach einem der vorhergehenden Ansprüche, dadurch charakterisiert, dass mindestens ein Paar der Sender (4, 5) einen magnetischen Fluss oder ein elektrostatisches oder elektrodynamisches Feld oder einen Lichtfluss aussenden oder die Eigenschaften eines zugehörigen Material- oder Materieflusses - insbesondere einer Flüssigkeit oder eines Fluids - modulieren und dass dieser durch den Empfänger (8) empfangen bzw. analysiert wird.

11. Sensor zur Vermessung der Übertragungseigenschaften einer ersten Übertragungsstrecke umfassend
- einen ersten Sender (4), der ein erstes Signal (7) in die erste Übertragungsstrecke (6) einspeist,
- einen zweiten Sender (5), der ein zweites Signal (19) in eine zweite Übertragungsstrecke (20), die vorbestimmt ist, einspeist,
- einen Empfänger (8) zum Empfangen des ersten Signals (7) und des zweiten Signals (19),
- einen Empfangsverstärker (10) zur Verarbeitung des Empfängersignals (27) des Empfängers (8),
- einen ersten Treiber (24) zur Ansteuerung des ersten Senders (4),
- einen zweiten Treiber (23) zur Ansteuerung des zweiten Senders (5),
- eine Regelungsschaltung, mit
- einem Signalgenerator (1), einem Schalter (3), um ein von dem Signalgenerator (1) erzeugtes Sendesignal (2) geschaltet zu dem ersten Sender (4) oder dem zweiten Sender (5) zu leiten,
- einem ersten Multiplizierer (12), mit dem das verstärkte Empfangssignal mit dem Sendesignal (2) multipliziert wird,
- einem zweiten Multiplizierer zum Multiplizieren des verarbeiteten Empfangssignals mit einem vorzeichenbehafteten Umschaltsignal (14),
- einem Integrierer (16), und
- einem Komparator (18) zur Digitalisierung des verarbeiteten integrierten Empfangssignals, wobei das Ausgangssignal des Komparators (18) nach Verzögerung mittels einer Verzögerungsschaltung (29) die Stellung des Schalters (3) bestimmt.

12. Sensor nach Anspruch 11, **dadurch gekennzeichnet, dass**
- der Treiber (24) und/oder der Treiber (23) einen Digital-Zu-Analogwandler (DAC) umfasst, der bevorzugt als Ein-Bit- oder Mehr-Bit-DAC ausgebildet ist,
- der Empfangsverstärker (10) ein Analog-Zu-Digital-Wandler (ADC) ist, der das Empfangssignal (27) in ein digitalisiertes Signal (31) umwandelt,
- wobei die Regelungsschaltung als digitale Logik oder Finite-State-Machine (FSM) oder als digitales Rechensystem (32) mit mindestens einem Speicher und einer Zentraleinheit ausgebildet ist.

13. Sensor nach Anspruch 11 oder 12, **dadurch gekennzeichnet, dass**
- die erste Übertragungsstrecke (6) nicht vorbestimmt ist und/oder
- der erste Treiber (24) ein Verstärker ist und/oder
- der zweite Treiber (23) ein Verstärker ist, wobei der erste Treiber (24) und der zweite Treiber (23) ein Bauteil sein können.

14. Sensor nach einem der Ansprüche 11 bis 13, **dadurch gekennzeichnet, dass** der Sensor dazu ausgebildet und eingerichtet ist, das Verfahren nach einem der vorhergehenden Ansprüche 1 bis 9 durchzuführen.

15. Sensor nach einem der Ansprüche 11 bis 14, **dadurch gekennzeichnet, dass** der erste Sender (4) und der zweite Sender (5) je eine LED oder Leuchte oder je eine Spule oder je eine Antenne oder je eine kapazitive Platte sind und der Empfänger entsprechend ausgebildet ist, insbesondere eine Photodiode, eine Spule, eine Antenne, eine kapazitive Platte ist.

16. Vorrichtung zur Vermessung der Übertragungseigenschaften einer ersten Übertragungsstrecke (6) umfassend einen Sensor nach einem der Ansprüche 10 bis 13, wobei das Umschaltsignal 21 des Sensors an eine Verarbeitungseinheit übergeben wird.

17. Vorrichtung nach Anspruch 16, **dadurch gekennzeichnet, dass** die Vorrichtung in einem Kraftfahrzeug verwendet wird, um Objekte in der Nähe des Kraftfahrzeugs zu delektieren, wobei die Vorrichtung bevorzugt eine Einparkhilfeeinrichtung eines Kraftfahrzeugs ist.

## Claims

1. A method for measuring the transmission characteristics of a first transmission path (6) between a first transmitter (4) and a receiver (8), wherein
- the first transmitter (4) sends a first signal (7) into the first transmission path (6), which is detected by the receiver (8) after passage through at least a part of the first transmission path (6),
- a second transmitter (5) sends a second signal (19) into a second transmission path (20), which with regard to the characteristics thereof is known, or is or can be predetermined,
- the second signal (19) is received in the receiver (8) after passage through the second transmission path (20) and superimposed on the first signal (7) in an additive manner,
**characterized in that**
- a transmission signal (2) is distributed between the first transmitter (4) and the second transmitter (5) at least temporarily in a controlled manner;
- a reception signal (27) received by the receiver (8) comprises a first signal component (27a) that is to be assigned to the first transmitter (4), and a second signal component (27b) that is to be assigned to the second transmitter (5), wherein the first signal component (27) averaged over a predefined time period (T) is the same size as the second signal component averaged over the time period (T), and
- in relation to the reception signal (27) received by the receiver (8), the deviation of the first signal component (27a) averaged over the predefined time period (T) from the second signal component (27b) averaged over the predefined time period (T) is used at least temporarily as a control signal for the distribution of the transmission signal (2) between the first transmitter (4) and the second transmitter (5).

2. The method according to Claim 1, **characterized in that** controlled switching takes place between the first transmitter (4) and the second transmitter (5) in an at least temporarily time-dependent or phase-dependent manner and/or a controlled switching of the transmission signal (2) between the first transmitter (4) and the second transmitter (5) is carried out.

3. The method according to Claim 1 or 2, **characterized in that** the said transmission signal (2) is distributed at least temporarily between the said first transmitter (4) and the said second transmitter (5) in an amplitude-controlled manner.

4. The method according to any one of the preceding claims, **characterized in that** a switching signal (28), which is used for switching between a first transmitter (4) and a second transmitter (5), is multiplied by the amplified or non-amplified and/or by the modulated or unmodulated receiver signal (11, 13) after multiplication by a constant.

5. The method according to any one of the preceding claims, **characterized in that** at least one of the transmission signals (2), which is used for controlling the first transmitter (4) and the second transmitter (5), is multiplied by the amplified or non-amplified and/or with the modulated or unmodulated receiver signal (11, 13, 15).

6. Method according to any one of the preceding claims, **characterized in that** after multiplication by the switching signal input (14) with the correct sign and by the transmission signal (2), the reception signal of the receiver (8) is filtered, in particular, integrated.

7. The method according to any one of the preceding claims, **characterized in that** after a filtering and/or at least one multiplication the reception signal is fed to a comparator, which converts the signal into a digital signal.

8. The method according to any one of the preceding claims, **characterized in that** the bit stream generated by a comparator (18) represents a measure of the characteristics of the transmission path (6) from at least the first transmitter (4) to at least the receiver (8), and/or a measure of characteristics of objects (9) that are operatively connected to the transmission channel (6) or are part of the same.

9. The method according to any one of the preceding claims, **characterized in that** a transmission signal (2), preferably a digital transmission signal (2), is generated.

10. The method according to any one of the preceding claims, **characterized in that** at least one pair of the transmitters (4, 5) emits a magnetic flux or an electrostatic or electrodynamic field or a light flux, or modulates the characteristics of an associated flow of material or matter - in particular a liquid, or a fluid - and that this is received or analyzed by the receiver (8).

11. Sensor for measuring the transmission characteristics of a first transmission path, comprising
- a first transmitter (4), which feeds a first signal (7) into the first transmission path (6),
- a second transmitter (5), which feeds a second signal (19) into a second transmission path (20), which is predefined,
- a receiver (8) for receiving the first signal (7) and the second signal (19),
- a receiving amplifier (10) for processing the reception signal (27) of the receiver (8),
- a first driver (24) for controlling the first transmitter (4),
- a second driver (23) for controlling the second transmitter (5),
- a control circuit, with
- a signal generator (1), a switch (3), in order to conduct a transmission signal (2) generated by the signal generator (1) to the first transmitter (4) or the second transmitter (5) in a switched manner,
- a first multiplier (12), with which the amplified reception signal is multiplied by the transmission signal (2),
- a second multiplier for multiplying the processed reception signal with a signed switching signal (14),
- an integrator (16), and
- a comparator (18) for digitizing the processed integrated reception signal, wherein the output signal of the comparator (18), after being delayed by means of a delay circuit (29), defines the position of the switch (3).

12. The sensor according to Claim 11, **characterized in that**
- the driver (24) and/or the driver (23) comprises a digital-to-analog converter (DAC), which is preferably implemented as a one-bit or multi-bit DAC,
- the receiving amplifier (10) is an analog-to-digital converter (ADC), which converts the reception signal (27) into a digitized signal (31),
- wherein the control circuit is implemented as digital logic, or a finite-state machine (FSM) or a digital calculating system (32) with at least one memory and a central processing unit.

13. The sensor according to Claim 11 or 12, **characterized in that**
- the first transmission path (6) is not predefined and/or
- the first driver (24) is an amplifier and/or
- the second driver (23) is an amplifier, wherein the first driver (24) and the second driver (23) can be one component.

14. The sensor according to any one of Claims 11 to 13, **characterized in that** the sensor is implemented and designed for carrying out the method according to any one of the preceding Claims 1 to 9.

15. The sensor according to any one of Claims 11 to 14, **characterized in that** the first transmitter (4) and the second transmitter (5) are each an LED or lamp or each a coil or each an antenna or each a capacitive plate and the receiver is implemented accordingly, and in particular is a photodiode, a coil, an antenna, a capacitive plate.

16. A device for measuring the transmission characteristics of a first transmission path (6), comprising a sensor according to any one of Claims 10 to 13, wherein the switching signal 21 of the sensor is passed to a processing unit.

17. The device according to Claim 16, **characterized in that** the device is used in a motor vehicle in order to detect objects in the vicinity of the motor vehicle, the device preferably being a parking assistance device of a motor vehicle.

## Revendications

1. Procédé de mesure des caractéristiques de transmission d'une première voie de transmission (6) entre un premier émetteur (4) et un récepteur (8), dans lequel
- le premier émetteur (4) envoie un premier signal (7) dans la première voie de transmission (6), qui est détecté par le récepteur (8) après passage à travers au moins une partie de la première voie de transmission (6),
- un deuxième émetteur (5) envoie un deuxième signal (19) dans une deuxième voie de transmission (20) dont les caractéristiques sont connues, déterminées à l'avance ou déterminables à l'avance,
- le deuxième signal (19), après passage à travers la deuxième voie de transmission (20), est reçu dans le récepteur (8) et superposé au premier signal (7) par addition,
**caractérisé en ce que**
- un signal d'émission (2) est distribué entre le premier émetteur (4) et le deuxième émetteur (5) de façon régulée au moins par intermittence,
- un signal de réception (27) reçu par le récepteur (8) comprend une première composante de signal (27a) à associer au premier émetteur (4) et une deuxième composante de signal (27b) à associer au deuxième émetteur (5), la première composante de signal (27a) moyennée sur une période prédéfinie (T) étant aussi grande que la deuxième composante de signal (27b) moyennée sur ladite période (T), et
- par rapport au signal de réception (27) reçu par le récepteur (8), l'écart entre la première composante de signal (27a) moyennée sur la période prédéfinie (T) et la deuxième composante de signal (27b) moyennée sur ladite période (T) est utilisé au moins par intermittence comme signal de régulation pour la distribution du signal d'émission (2) entre le premier émetteur (4) et le deuxième émetteur (5).

2. Procédé selon la revendication 1, **caractérisé en ce qu'**il est commuté entre le premier émetteur (4) et le deuxième émetteur (5) de façon régulée au moins par intermittence en fonction du temps ou en fonction de la phase, et/ou une commutation régulée du signal d'émission (2) a lieu entre le premier émetteur (4) et le deuxième émetteur (5).

3. Procédé selon la revendication 1 ou 2, **caractérisé en ce que** l'amplitude dudit signal d'émission (7) est distribuée de façon régulée au moins par intermittence entre ledit premier émetteur (4) et ledit deuxième émetteur (5).

4. Procédé selon l'une des revendications précédentes, **caractérisé en ce qu'**un signal de commutation (28), utilisé pour la commutation entre un premier émetteur (4) et un deuxième émetteur (5), est multiplié après multiplication par une constante par le signal de récepteur (11, 13) amplifié ou non et/ou modulé ou non.

5. Procédé selon l'une des revendications précédentes, **caractérisé en ce qu'**au moins l'un des signaux d'émission (2), utilisé pour la commande du premier émetteur (4) et du deuxième émetteur (5), est multiplié par le signal de récepteur (11, 13, 15) amplifié ou non et/ou modulé ou non.

6. Procédé selon l'une des revendications précédentes, **caractérisé en ce que** le signal de récepteur du récepteur (8) est filtré, en particulier intégré, après multiplication par le signal de commutation (14) avec le bon signe et le signal d'émission (2).

7. Procédé selon l'une des revendications précédentes, **caractérisé en ce que** le signal de récepteur est acheminé après un filtrage et/ou au moins une multiplication à un comparateur qui convertit le signal en un signal numérique.

8. Procédé selon l'une des revendications précédentes, **caractérisé en ce que** le flux de bits généré par un comparateur (18) constitue une mesure des caractéristiques de la voie de transmission (6) entre au moins le premier émetteur (4) et au moins le récepteur (8), et/ou une mesure des caractéristiques d'objets (9) qui coopèrent avec la voie de transmission (6) ou constituent une partie de celle-ci.

9. Procédé selon l'une des revendications précédentes, **caractérisé en ce qu'**il est produit un signal d'émission (2), de préférence un signal d'émission (2) numérique.

10. Procédé selon l'une des revendications précédentes, **caractérisé en ce qu'**au moins deux des émetteurs (4, 5) émettent un flux magnétique ou un champ électrostatique ou électrodynamique ou un flux de lumière, ou modulent les caractéristiques d'un flux de matériau ou de matière associé, en particulier d'un liquide ou d'un fluide, et **en ce que** celui-ci est reçu et/ou analysé par le récepteur (8).

11. Capteur de mesure des caractéristiques de transmission d'une première voie de transmission, comprenant
- un premier émetteur (4) qui injecte un premier signal (7) dans la première voie de transmission (6),
- un deuxième émetteur (5) qui injecte un deuxième signal (19) dans une deuxième voie de transmission (20), laquelle est déterminée à l'avance,
- un récepteur (8) pour recevoir le premier signal (7) et le deuxième signal (19),
- un amplificateur de réception (10) pour traiter le signal de récepteur (27) du récepteur (8),
- un premier pilote (24) pour commander le premier émetteur (4),
- un deuxième pilote (23) pour commander le deuxième émetteur (5),
- un circuit de régulation, comprenant
- un générateur de signal (1), un commutateur (3) pour conduire un signal d'émission (2) généré par le générateur de signal (1) de façon commutée au premier émetteur (4) ou au deuxième émetteur (5),
- un premier multiplicateur (12) servant à multiplier le signal de réception amplifié par le signal d'émission (2),
- un deuxième multiplicateur pour multiplier le signal de réception traité par un signal de commutation (14) affecté d'un signe,
- un intégrateur (16), et
- un comparateur (18) pour numériser le signal de réception traité et intégré, le signal de sortie du comparateur (18) déterminant la position du commutateur (3) après temporisation réalisée par un circuit de temporisation (29).

12. Capteur selon la revendication 11, **caractérisé en ce que**
- le pilote (24) et/ou le pilote (23) comprend un convertisseur numériqueanalogique (CNA) qui se présente de préférence sous forme de CNA monobit ou multibit,
- l'amplificateur de réception (10) est un convertisseur analogique-numérique (CAN) qui convertit le signal de réception (27) en un signal numérisé (31),
- le circuit de régulation se présentant sous forme de logique numérique ou d'automate fini (FSM : Finite State Machine) ou sous forme de système informatique numérique (32) comprenant au moins une mémoire et une unité centrale.

13. Capteur selon la revendication 11 ou 12, **caractérisé en ce que**
- la première voie de transmission (6) n'est pas déterminée à l'avance et/ou
- le premier pilote (24) est un amplificateur et/ou
- le deuxième pilote (23) est un amplificateur, le premier pilote (24) et le deuxième pilote (23) pouvant être un composant.

14. Capteur selon l'une des revendications 11 à 13, **caractérisé en ce que** le capteur est conçu et configuré pour la mise en oeuvre du procédé selon l'une des revendications précédentes 1 à 9.

15. Capteur selon l'une des revendications 11 à 14, **caractérisé en ce que** le premier émetteur (4) et le deuxième émetteur (5) sont chacun une LED ou une lampe ou une bobine ou une antenne ou une plaque capacitive, et le récepteur conçu en conséquence est en particulier une photodiode, une bobine, une antenne, une plaque capacitive.

16. Dispositif de mesure des caractéristiques de transmission d'une première voie de transmission (6) comprenant un capteur selon l'une des revendications 10 à 13, le signal de commutation (21) du capteur étant transmis à une unité de traitement.

17. Dispositif selon la revendication 16, **caractérisé en ce que** le dispositif est utilisé dans un véhicule pour détecter des objets à proximité du véhicule, le dispositif étant de préférence un système d'aide au stationnement d'un véhicule.
